# EUROPÄISCHE PATENTSCHRIFT

(11) **EP 2 215 369 B1**
(45) Veröffentlichungstag und Bekanntmachung des Hinweises auf die Patenterteilung: **06.06.2012**
(21) Anmeldenummer: 08833158.2
(22) Anmeldetag: 18.09.2008
(51) Int. Cl.: F16B 5/02, B62D 17/00, F16B 19/02, F16B 35/04, F16B 43/00

(54) **EXZENTER-EINSTELLELEMENT**
ECCENTRIC ADJUSTMENT ELEMENT
ÉLÉMENT DE RÉGLAGE À EXCENTRIQUE

(30) Priorität: 25.09.2007 DE 202007013473 U
(43) Veröffentlichungstag der Anmeldung: 11.08.2010
(73) Patentinhaber: Ruia Global Fasteners AG, 41462 Neuss (DE)
(72) Erfinder: SCHRAER, Thorsten, 85305 Jetzendorf (DE)
(74) Vertreter: Beck, Alexander
(86) Internationale Anmeldenummer: PCT/DE2008/001554
(87) Internationale Veröffentlichungsnummer: WO 2009/039834

(56) Entgegenhaltungen:
- WO-A-2005/052386
- DE-U1-202007 006 410
- FR-A- 2 720 845
- US-A1- 2005 001 397

## Beschreibung

Die vorliegende Erfindung betrifft ein Exzenter-Einstellelement. Solche Einstellelemente finden beispielsweise im Kraftfahrzeugbau für die Spureinstellung verbreitete Verwendung. Bisher verwendete man dazu ausschließlich Exzenter-Schrauben oder Schraube-Exzenterscheibenkombinationen. Diese werden beispielsweise in dem deutschen Gebrauchsmuster 20 2007 006 410.1 der Anmelderin beschrieben.

Weitere Schraube-Exzenterscheibenkombinationen sind bereits aus der FR 2 720 845, der EP 1 216 362 oder der DE 200 12 108 U1 bekannt.

Gemäß diesem Stand der Technik fanden stets Exzenter-Einstellelemente Verwendung, die als Schraube oder Bolzen ausgebildet waren. Die schraubenkopfseitige Exzenterscheibe wurde dabei entweder im Zuge der Kaltverformung mit dem Schraubenkopf zusammen ausgebildet, oder auf dem Schaft der Schraube aufgesetzt und am Kopf verstemmt. Dies führt jedoch zu folgenden Nachteilen:

Es ist sehr schwierig, entsprechende Schraubenköpfe einschließlich der sehr großen Exzenterscheibe durch Kaltverformung herzustellen, da diese dabei aufgrund des hohen erforderlichen Grades an Kaltverformung bei der Herstellung zerstört werden können.

Die einzige bisher hierzu bekannte Alternative bestand im Verstemmen einer entsprechenden Beilagsscheibe am Schaft in der Nähe des Kopfes. Teilweise erforderte dies eine durchgehende Ausbildung des Profils über den ganzen Schaft der Schraube hinweg. Dies führte insbesondere bei längeren Schraube-Exzenterscheibenkombinationen zu erheblichem Herstellungsaufwand, da eine große Verformungsleistung erforderlich war, um den gesamten Schaft einer langen Schraube zu profilieren.

Ausgehend von diesem Stand der Technik ist es daher Aufgabe der Erfindung, ein Exzenter-Einstellelement zur Verfügung zu stellen, welches erheblich einfacher zu fertigen ist.

Erfindungsgemäß wird diese Aufgabe durch ein Exzenter-Einstellelement gelöst, welches eine Stange umfasst, die an ihren beiden Enden mit Außengewinden geringeren Durchmessers versehen ist, an die sich jeweils nach innen hin profilierte Abschnitte erstrecken, wobei der kleinste Abstand des Profils von einer Rotationsachse der Stange größer ist als der Außenradius der Außengewinde und auf die profilierten Abschnitte jeweils Exzenterscheiben aufgesetzt sind.

Gegenüber den im bisherigen Stand der Technik bekannten Schraube-Exzenterscheibenkombinationen hat diese Konstruktion auch den Vorteil, dass die Stange beliebig bei der Montage von jeder Seite eingesteckt werden kann, da kein Kopf größeren Durchmessers bei der Montage berücksichtigt werden muss.

Erst nach der Montage der Stange werden dann die Exzenterscheiben aufgesteckt und gegebenenfalls die Muttern von beiden Seiten her aufgeschraubt.

Die Profilierung der Stange kann sich dabei auf kleine Bereiche im Anschluss an die Außengewinde beschränken, alternativ kann sich die Profilierung aber auch über die gesamte Länge der Stange erstrecken. Dies kann jeweils nach den Bedürfnissen der Fertigung der Stange ausgewählt werden.

Besonders bevorzugt ist es dabei, auf die Außengewinde Muttern mit einem Innengewinde aufzuschrauben, welches an die Außengewinde angepasst ist, und welches auf die Exzenterscheiben hin in eine Bohrung größeren Durchmessers übergeht, der so gewählt ist, dass er größer ist, als der größte Durchmesser der profilierten Abschnitte. Auf diese Weise lässt sich die Exzenterscheibe über einen größeren Bereich der profilierten Abschnitte mittels der Muttern aufschrauben.

Zur Erleichterung der Montage ist es weiter bevorzugt, dass ein Ende der Stange mit einem Kraftangriff, vorzugsweise einem Außenkraftangriff, versehen ist. Auf diese Weise kann die Stange beim Aufschrauben der Muttern mit einem Werkzeug festgehalten werden, sodass jede Mutter einzeln und unabhängig voneinander aufgeschraubt und festgezogen werden kann, oder eine Mutter festgehalten und die Stange mittels des Kraftangriffs eingeschraubt werden kann.

Die vorliegende Erfindung wird im Folgenden anhand des in der anliegenden Zeichnung dargestellten Ausführungsbeispieles näher erläutert.

Es zeigt:
Figur 1 ein erfindungsgemäßes Exzenter-Einstellelement von der Seite (Muttern und Exzenterscheiben geschnitten);
Figur 2 das Exzenter-Einstellelement der Figur 1 von der mit dem Kraftangriff versehenen Seite her dargestellt;
Figur 3 eine Schnittdarstellung durch den profilierten Abschnitt der Stange der Figur 1.

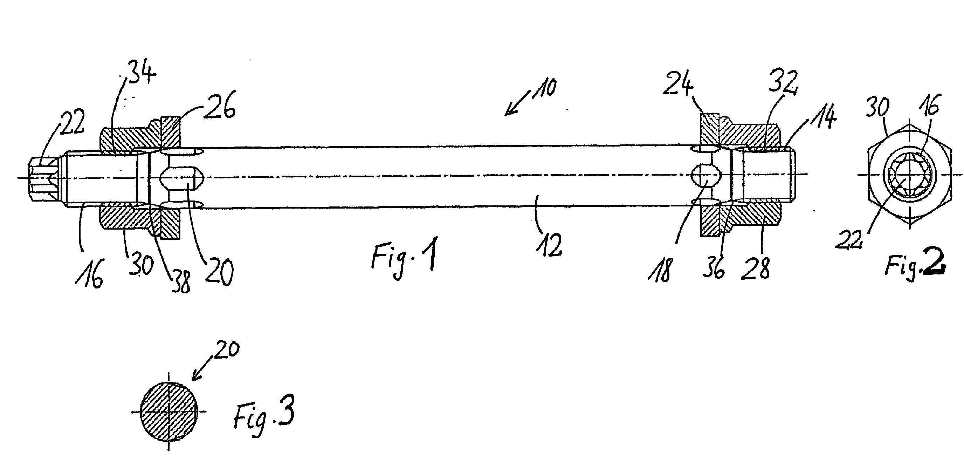

Figur 1 zeigt ein erfindungsgemäßes Exzenter-Einstellelement 10. Dieses umfasst eine Stange 12, die an ihren beiden Enden mit Außengewinden 14, 16 versehen ist. An diese Außengewinde 14, 16 schließen sich nach innen hin jeweils profilierte Abschnitte 18, 20 der Stange 12 an. Der Radius der Außengewinde 14, 16 ist dabei stets geringer als der kleinste Abstand der Profilierungen der profilierten Abschnitte 18, 20 von einer Rotationsachse der Stange 12.

An einem, gegebenenfalls auch an beiden Enden der Stange 12 kann jenseits des jeweiligen Außengewindes 14 oder 16, also ganz außen am jeweiligen Ende der Stange 12 ein Außenkraftangriff 22 vorgesehen sein. Bei dem in Figur 1 dargestellten Ausführungsbeispiel ist der Außenkraftangriff 22 jenseits des Außengewindes 16 angeordnet. Der Außendurchmesser des Kraftangriffs 22 ist dabei so zu wählen, dass er kleiner ist als der Gewindeinnendurchmesser des jeweiligen Außengewindes 14, 16.

Vorzugsweise findet ein Außensechsrund- oder Außensternkraftangriff Verwendung.

Auf die dergestalt ausgebildete Stange sind auf beiden Seiten entsprechende Exzenterscheiben 24, 26 mit einer entsprechend profilierten exzentrischen Bohrung aufgesteckt. Auf die jeweiligen Außengewinde 16 werden vorzugsweise speziell gestaltete Muttern 28, 30 aufgeschraubt. Diese weisen lediglich über einen Teil ihrer Länge hinweg ein Innengewinde 32, 34 auf. An derjenigen Seite der Muttern 28, 30, die nach der Montage den Exzenterscheiben 24, 26 zugewandt ist, weisen die Muttern 28, 30 vorzugsweise eine Bohrung mit einem größeren Innendurchmesser auf. Dieser Innendurchmesser ist vorzugsweise größer als der größte Außendurchmesser der profilierten Abschnitte 18, 20. Auf diese Weise kann die Mutter zumindest teilweise über die profilierten Abschnitte 18, 20 geschraubt werden und die Exzenterscheiben 24, 26 können entsprechend weit nach innen hin auf der Stange 12 verstellt werden.

Die Figur 2 zeigt das erfindungsgemäße Exzenter-Einstellelement der Figur 1 von der Seite, an der der Kraftangriff 22 angeordnet ist.

Hierbei wird erkennbar, dass es sich bei dem Kraftangriff 22 um einen Außensechsrund- (hexalobulären) Kraftangriff handelt. Ebenso wird erkennbar, dass die Muttern einen Außenkraftangriff in Form eines üblichen Außensechskantes aufweisen. Hier sind selbstverständlich auch andere Außenkraftangriffe möglich.

Figur 3 zeigt schließlich einen Schnitt durch die Stange 12 im Bereich des profilierten Abschnittes 20. Wie man erkennen kann, ist hier ein Profil mit mehreren, asymmetrisch verteilten Abflachungen des äußeren Umfanges der Stange 12 gewählt worden. Selbstverständlich kann erfindungsgemäß auch ein andersartiges Profil, beispielsweise ein symmetrisches Profil verwendet werden.

Bei der dargestellten Ausführungsform gemäß Figuren 1 bis 3 ist auch eine Montage des Exzenter-Einstellelementes an schwierig zugänglichen Stellen des Kraftfahrzeuges möglich. Das erfindungsgemäße Exzenter-Einstellelement kann nämlich beispielsweise von einer Seite (der leicht zugänglichen Seite) eingeschoben werden, und dann muss von der schwer zugänglichen Seite lediglich die Exzenterscheibe aufgesteckt und sodann die Mutter 28 auf das Außengewinde 14 gehalten werden. Hierbei genügt es, die Mutter 28 festzuhalten, ein Drehen der Mutter ist nicht nötig, da die Stange 12 mittels des Außenkraftangriffs 22 in die festgehaltene Mutter 28 hineingedreht werden kann, sodann kann die zweite Mutter 30 von der besser zugänglichen Seite aufgeschraubt werden. Hierbei muss die Mutter 28 an der schlecht zugänglichen Seite ebenfalls nur leicht festgehalten werden, wobei ein entsprechend kleines Werkzeug Verwendung finden kann. Gegebenfalls wäre es sogar möglich, wenn die Mutter 28 bei diesem Montageschritt bereits gar nicht mehr zugänglich ist, die Stange 12 mittels des Außenkraftangriffs 22 festzuhalten während die Mutter 30 von dieser Seite aufgeschraubt wird.

Im Übrigen ermöglicht diese Erfindung eine maximale Flexibilität in der Herstellung der erfindungsgemäßen Exzenter-Einstellelemente, da lediglich Stangen verschiedener Länge hergestellt werden müssen, auf die dann je nach Bedarf des Kunden entsprechende Exzenterscheiben unterschiedlichen Durchmessers und unterschiedlicher Exzentrizität aufgesetzt werden müssen. Dies verringert die nötige Vielfalt in der Fertigung erheblich und erleichtert die Lagerhaltung.

## Patentansprüche

1. Exzenter-Einstellelement (10), **dadurch gekennzeichnet, dass** es eine Stange (12) umfasst, die an ihren beiden Enden mit Außengewinden (14, 16) geringeren Durchmessers versehen ist, an die sich jeweils nach innen hin profilierte Abschnitte (18, 20) ohne Gewinde anschließen, wobei der kleinste Abstand des Profils von einer Rotationsachse der Stange größer ist, als der Außenradius der Außengewinde (14, 16) und auf die profilierten Abschnitte (18, 20) jeweils Exzenterscheiben (24, 26) aufgesteckt sind.

2. Exzenter-Einstellelement (10) nach Anspruch 1, **dadurch gekennzeichnet, dass** sich die profilierten Abschnitte (18, 20) über die ganze Länge der Stange (12) zwischen den Außengewinden (14, 16) erstrecken.

3. Exzenter-Einstellelement (10) nach Anspruch 1 oder 2, **dadurch gekennzeichnet, dass** auf die Außengewinde (14, 16) Muttern (28, 30) mit einem Innengewinde (32, 34) aufgeschraubt sind, welches an die Außengewinde (14, 16) angepasst ist, und welches auf die Exzenterscheiben (24, 26) hin in eine Bohrung (36, 38) größeren Durchmessers übergeht, der so gewählt ist, dass er größer ist, als der größte Durchmesser der profilierten Abschnitte (18, 20).

4. Exzenter-Einstellelement (10) nach einem der Ansprüche 1 bis 3, **dadurch gekennzeichnet, dass** ein Ende der Stange (12) mit einem Kraftangriff (22) versehen ist.

5. Exzenter-Einstellelement (10) nach Anspruch 4, **dadurch gekennzeichnet, dass** der Kraftangriff (22) als Außenkraftangriff ausgebildet ist.

## Claims

1. Eccentric adjustment element (10), **characterized in that** it comprises a rod (12), which is provided at its both ends with exterior threads (14, 16) of a smaller diameter followed inwardly each by profiled sections (18, 20) without any thread, wherein the shortest distance of the profile from a rotational axis of the rod is larger than the exterior radius of the exterior threads (14, 16) and, **in that** onto the profiled sections (18, 20) each eccentric disks (24, 26) are fitted.

2. Eccentric adjustment element (10) according to claim 1, **characterized in that** the profiled sections (18, 20) are extending over the entire length of the rod (12) between the exterior threads (14, 16).

3. Eccentric adjustment element (10) according to claim 1 or 2, **characterized in that** onto the exterior threads (14, 16) nuts (28, 30) having an interior thread (32, 34) being adapted to the exterior thread (14, 16) are screwed and which in the direction of the eccentric disks (24, 26) is changing into a bore (36, 38) of a larger diameter which is chosen such that it is larger than the largest diameter of the profiled sections (18, 20).

4. Eccentric adjustment element (10) according to any of the claims 1 to 3, **characterized in that** one end of the rod (12) is provided with a force introducing device (22).

5. Eccentric adjustment element (10) according to claim 4, **characterized in that** the force introducing device (22) is designed as an exterior force introducing device.

## Revendications

1. Elément de réglage à excentriques (10), **caractérisé en ce qu'**il comprend une tige (12), qui est pourvue à ses deux extrémités de filets externes (14, 16) de diamètre plus petit, auxquels se raccordent des sections (18, 20) profilées respectivement vers l'intérieur sans filet, dans lequel la plus petite distance du profilé d'un axe de rotation de la tige est supérieure au rayon externe du filet externe (14, 16) et des disques excentriques (24, 26) sont respectivement enfichés sur les sections profilées (18, 20).

2. Elément de réglage à excentriques (10) selon la revendication 1, **caractérisé en ce que** les sections profilées (18, 20) s'étendent sur toute la longueur de la tige (12) entre les filets externes (14, 16).

3. Elément de réglage à excentriques (10) selon la revendication 1 ou 2, **caractérisé en ce que** des écrous (28, 30) avec un filet interne (32, 34) sont vissés sur le filet externe (14, 16), lequel filet interne est adapté au filet externe (14, 16) et se transforme en direction des disques excentriques (24, 26) en un perçage (36, 38) de diamètre plus grand, qui est choisi de sorte qu'il soit supérieur au plus grand diamètre des sections profilées (18, 20).

4. Elément de réglage à excentriques (10) selon l'une quelconque des revendications 1 à 3, **caractérisé en ce qu'**une extrémité de la tige (12) est pourvue d'une prise de force (22).

5. Elément de réglage à excentriques (10) selon la revendication 4, **caractérisé en ce que** la prise de force (22) se présente sous la forme d'une prise de force externe.
